**Europäisches Patentamt**

**European Patent Office**

**Office européen des brevets**

(19)

(11) Publication number: **0 478 783 B1**

(12)

# EUROPEAN PATENT SPECIFICATION

(45) Date of publication of patent specification :
**22.06.94 Bulletin 94/25**

(51) Int. Cl.⁵ : **A23K 1/16, A23K 1/18**

(21) Application number : **91905311.6**

(22) Date of filing : **02.03.91**

(86) International application number :
**PCT/JP91/00282**

(87) International publication number :
**WO 91/12731 05.09.91 Gazette 91/21**

(54) **FEED ADDITIVE FOR RUMINANT.**

(30) Priority : **02.03.90 JP 51205/90**
**29.03.90 JP 82552/90**

(43) Date of publication of application :
**08.04.92 Bulletin 92/15**

(45) Publication of the grant of the patent :
**22.06.94 Bulletin 94/25**

(84) Designated Contracting States :
**AT BE CH DE DK ES FR GB GR IT LI LU NL SE**

(56) References cited :
**EP-A- 0 387 597**
**GB-A- 2 160 096**
**JP-A- 2 163 043**
**JP-A- 2 163 044**

(73) Proprietor : **NIPPON SODA CO., LTD.**
**2-1, Ohtemachi 2-chome**
**Chiyoda-ku, Tokyo 100 (JP)**

(72) Inventor : **SASAOKA, Seiji, R & D Laboratory**
**for Spec. Chemicals**
**Nippon Soda Co., Ltd.,**
**12-54, Goiminamikaigan**
**Ichihara-shi, Chiba 290 0 (JP)**
Inventor : **AOKI, Izuo, R & D Laboratory for**
**Spec. Chemicals**
**Nippon Soda Co., Ltd.,**
**12-54, Goiminamikaigan**
**Ichihara-shi, Chiba 290 (JP)**
Inventor : **MARUYAMA, Hiroshi, R & D**
**Laboratory for Spec. Chem.**
**Nippon Soda Co., Ltd.,**
**12-54, Goiminamikaigan**
**Ichihara-shi, Chiba 290 290 (JP)**

(74) Representative : **de Bruijn, Leendert C.**
**Nederlandsch Octrooibureau**
**Scheveningseweg 82**
**P.O. Box 29720**
**NL-2502 LS Den Haag (NL)**

Jouve, 18, rue Saint-Denis, 75001 PARIS

## Description

[Technical field]

This invention is concerned with feedstuffs for ruminants, in detail, in which biologically active substances such as amino acids and vitamins are dispersed in protectants mainly consisting of bi-valent metal salts of mixed fatty acids and moulded to pellets to be bypassed through the rumen, but to be digested and absorbed in the abomasum and further digestive organs.

The ruminant feedstuffs of the invention are useful additives for commercial formula feeds by oral administration to the ruminants such as cattle and sheep because of the higher bio-availability of biologically active substances such as amino acids and vitamins.

[Background art]

When biologically active substances such as amino acids, vitamins and proteins are orally administered to ruminants, they are degraded by microorganisms in the rumen of the animals but little absorbed by the abomasum or subsequent digestive organs, because they can not reached these organs.

In order to provide orally higher availability of these biologically active substances for ruminants, various formulations in which the active substances are dispersed in protective materials, for example, higher fatty acids, their triglycerides, fats, or hardened plant or animal oils, or coated by the protectants, to be stabilized in the rumen, but to easily disintegrate, be digested and be absorbed in the abomasum and further digestive organs, have been proposed (cf. Tokkai-Sho-58-175449 (1983), Tokkai-Sho-59-198946 (1984)).

In order to provide disintegration in the abomasum or following digestive organs, the applicant of this invention has proposed a formulation in which the active substances are dispersed in or coated with materials protecting them from decomposition in the rumen, and consisting of hardened oil containing chitosan [Tokkai-Sho 58-175449 (1983), Tokkai-Sho 59-198946 (1984)] which formulation has been marketing it as trade name "Lactet®".

On the other hand, salts of bi-valent metals such as Ca or Mg salts of fatty acids having 14, 16 and/or 18 carbon atoms were proposed to serve as energy source bypassing the rumen and to be absorbed with higher bioavailability in the abomasum and following digestive organs for ruminants (cf. USP. 4,826,694, USP. 4,642,317 etc.), and Ca salts of fatty acids derived from naturally occurring fats (abbreviated "bypass fat", hereafter) have been commercialized.

A feedstuff containing such bypass fat as protectant for ruminants (cf. GB 2,113,521) and its manufacturing process in which bypass fat is heated above its melting point to be softened, blended with biologically active substances, then cooled to be solidified and milled, have been proposed (cf. Tokkai-Sho-63-313546 (1988)).

[Disclosure of invention]

When a formulation in which biologically active substances are dispersed in protectants such as fatty acids and hardened oils, or coated with such protectants, is orally administered, although its property of rumen bypassing, digestion and absorption efficiency in the abomasum and following digestive organs of the active substances may be excellent, its storage and heat resistant stabilities at higher than 40°C are unsatisfactory, because of its low softening temperature.

On the other hand, metal salts of mixed fatty acids have a softening temperature higher than 100°C, and their rumen bypassing property and bioavailability in the abomasum and following organs of ruminants are excellent.

Therefore, it is expected that formulations using metal salts of the mixed fatty acids as protectants have sufficient heat resistant stability, but the biologically active substances cannot be coated with metal salts of the mixed fatty acids sufficiently to protect them in the formulation according to the previously cited literature. So in case such a formulation is orally administered to ruminants, the property of bypassing the active substances through the rumen is uncertain and unsatisfactory.

The purpose of the invention is to provide ruminant feedstuffs which are composed of bivalent metal salts of mixed fatty acids as main components of a protectant in the formulation, and have sufficient thermal stability, whereby they are well bypassed through the rumen and well digested and absorbed in the abomasum and following digestive organs when they are orally administered to ruminants.

After considerable research efforts, the inventors found that the rumen bypassing property of the biologically active substances dispersed in a protectant composed of Ca salts of mixed fatty acids as main components and formulated into a pellet depended significantly on moisture content and void ratio of the formulation and also depended on the content of free calcium hydroxide in Ca salts of mixed fatty acids used as protectant and on the crystalline structure of the Ca salts. Furthermore, the inventors found that addition of a hydrophobic substance which was mutually soluble with Ca salts of mixed fatty acids as another component in the protectant was effective to conveniently control the moisture content, the void ratio and the crystalline structure of the Ca salts. Thus, the inventors accomplished the invention.

The invention is concerned with ruminant feedstuffs in which one or more kinds of biologically active substances selected from group consisting of amino acids, their salts and vitamins are dispersed and molded into a pellet in a protectant in which bi-valent metal salts of mixed fatty acids are main components, and the void ratio is 15% or less and the moisture content is 2% by weight or less.

The invention is described in detail as follows:

(Biologically active substance)

The biologically active substance exhibiting the effect of growth promotion, improvement of milk quality, increase of lactation, improvement of wool quality, prevention from diseases and cure of diseases etc. for domestic animals, is easily decomposable by microorganisms in the rumen and its effect is less effective especially in the case of oral administration to ruminants.

As examples of them, amino acids: methionine, lysine, tryptophane etc., N-acyl amino acids: N-stearylmethionine, N-oleylmethionine, calcium salt of N-hydroxymethylmethionine etc., salts of amino acids: lysine hydrochloride etc., hydroxyhomologues of amino acids: 2-hydroxy-4-methylmercaptobutyric acid and its calcium salt etc., vitamins: vitamin A, vitamin A acetate, vitamin A palmitate, vitamin D3, vitamin E, nicotinic acid and nicotinic acid amide, calcium pantothenate, betacarotene etc., enzymes: acidic protease etc., carbohydrates: glucose etc., veterinary medicines: antibiotics such as penicillin, tetracycline etc., anthelminthics such as negfomin are given and one of them or more are utilized.

Amino acids, their salts and vitamins are especially desirable because they tend to come short in many growth stages of ruminants.

(Bi-valent metal salts of mixed fatty acids)

In bi-valent metal salts of mixed fatty acids, bi-valent metals such as Ca or Mg salts of naturally occurring mixed fatty acids are allowed to be applied without limitation and Ca salts of mixed fatty acids with melting point 30-50°C are desirably applied, furthermore, Ca salts of saturated and/or unsaturated fatty acids of carbon number 6 to 18 are more desirable. Among them use of Ca salts of mixed fatty acids containing one or more kinds of unsaturated fatty acid, for example, linoleic or linolenic acid, as a main component are especially desirable.

Additionally, if Ca salts of mixed fatty acids are only used as protectant, free $Ca(OH)_2$ content in Ca salts of mixed fatty acids is desirably less than 5%.

(Protectants)

The protectants are bi-valent metal salts of the mixed fatty acids previously described, or a mixture of said bi-valent metal salts of fatty acids and hydrophobic substances which are mutually soluble with the former substances, or substances soluble under acidic condition but insoluble under neutral or alkaline condition, or specific gravity adjusting materials and binders etc. In addition, the softening point of the protectant is desirably higher than 60°C, more desirably higher than 80°C.

The hydrophobic substance mutually soluble with said bi-valent metal salt is added as a component to control crystallization of the bi-valent salt and to keep the finesse of the formulation. Saturated or unsaturated, straightchained or branched fatty acids of carbon number 8 to 24, 12-hydroxystearic acid, monoglycerides of the fatty acids described before and higher alcohols etc., are given as examples of the hydrophobic substance.

The soluble substance under acidic condition is added as an adjuvant for disintegration of the formulation in the abomasum and subsequent digestive and absorptive organs. Compounds containing an amino group such as chitosan and polyvinyl acetal diethylaminoacetate (AEA) are desirably applied as the soluble substance under acidic condition.

The specific gravity adjuster is added to keep the specific gravity of the formulation close to that of the rumen juice and to prevent retention in the rumen. An inorganic filler such as calcium carbonate or talc may be used as an adjuster of the specific gravity. The binder is added to improve molding of the pellet. Fat, oil, hardened oil from animals and plants, wax and ethylcellulose are desirably used as these binders.

(Formulation)

The formulation of which the void ratio is 15% or less and the moisture content is 2% or less by weight is made by dispersing 5-50 parts, preferably 10-40 parts by weight of the biologically active substance in 95-50 parts, preferably 90-60 parts by weight of the protectant, and then moulding the resultant mixture into pellets having a diameter of 0.2-5 mm.

In case Ca salts of mixed fatty acids are especially applied as the protectant, they desirably have an amorphous structure. Because Ca salts of mixed fatty acids commonly have a crystalline structure, they are prepared to be of an amorphous type by rapidly cooling them after being heated at 130°C or higher. Whether they essentially have a crystalline or amorphous structure is distinguishable by peak strength in the X-ray diffraction analysis of the sample. The peak strength observed for Ca salt of fatty acid in the sample is desirably 40% or less of that of their crystalline structure.

(Void ratio of the formulation)

The void ratio is estimated from the difference between the theoretical specific gravity as calculated for each component of the formulation and the bulk specific gravity of the formulation experimentally observed.

(Moisture content in the formulation)

The moisture content indicates water content except for crystal water of bi-valent metal salts of mixed fatty acids and is estimated from the difference between total moisture and crystal water contents in the formulation. The moisture content is obtained by weight loss on drying and differential thermal analysis for both a sample of the formulation milled to 100 mesh (diameter = 150 μm) or less and one obtained by washing the above-mentioned sample, further drying it with silica gel under reduced pressure at 1,3-3,9 kPa (10-30 mmHg) to the constant weight to remove adhesive water.
Method of weight loss on drying:
Sampling weight 5 g
Drying condition 110°C for 24 hours
Differential thermal analysis
Sampling weight 30 mg
Temperature elevation rate 10°C/min
The highest temperature 180°C
Reference standard substance aluminium oxide.

(Moulding to pellet)

The formulation can be moulded by heating to a temperature higher than the softening point of the bi-valent metal salts of mixed fatty acids with sufficient degassing and by rapidly cooling the mixture of components.

More specifically, the mixture of components is heated to a temperature higher than the softening point of the bi-valent metal salts of mixed fatty acids under a reduced pressure of 26.6 kPa (200 Torr) or lower, preferably of 13.3 kPa (100 Torr) or lower under vacuum degassing with well blending and kneading by using an extruder equipped with a vacuum nozzle, pressed to strands according to the indicated dimension and rapidly cooled, desirably by water spraying or by immersion in water. Thus, the indicated size of the pellet formulation can be obtained by cutting the strand. When Ca salts of mixed fatty acids are used as components, the temperature is higher than 130°C, desirably 150-170°C.

It is undesirable that temperature of the mixture is too low or the rate of cooling to solidify is too slow, because bi-valent metal salts of mixed fatty acids in the formulation may then be transformed into a crystalline structure.

It is also undesirable that the degassing is insufficient, because the moisture content and the void ratio in the formulation will then be too high. Therefore sufficient degassing under reduced pressure is desirable.

(Action of the invented materials)

As described above, this invention is concerned with ruminant feedstuffs formulated into pellets which contain biologically active substances selected from amino acids and vitamins dispersed in a protectant containing bi-valent metal salts of mixed fatty acid as a main component, and is characterized by the formulation of which the void ratio is 15% or less and the moisture content is 2% by weight or less to be well balanced between properties or rumen bypassing and digestion and absorption in the abomasum and following digestive organs.

The void ratio is an index value representing the fineness of formulation and the higher the value is, the lower the protective effect for the active components is. Therefore, the void ratio should be 15% or less.

The existence of moisture (adhesive water) in the formulation causes the active substances to be soluble in adhesive water and to be eluted into the rumen. Therefore, the moisture content should be held at 2% by weight at the largest.

The crystallization property of bi-valent metal salts of mixed fatty acid in the formulation also affects elution in the rumen and absorption in the abomasum and following digestive organs for the active substances. The higher crystallization property causes the lower ability of rumen bypassing of the active substance. Therefore, the bi-valent metal salts of mixed fatty acids are preferably amorphous.

Free metal hydroxides which are contained in the metal salts of mixed fatty acids inhibit disintegration of the formulation and digestion in the abomasum and following organs, because they neutralize the gastric juice of the abomasum. Therefore, the content of free metal hydroxides in the salts of mixed fatty acids is desirably 5% by weight or less.

The incorporation of a hydrophobic substance which is mutually soluble with the bi-valent metal salts of mixed fatty acids into the protectant does not only serve to inhibit the crystallization of the metal salts but also to contribute to the formulation fineness and also to improve the function of bypassing through the rumen. However, an excessive addition of the hydrophobic substance is undesirable because it lowers the softening point of the formulation. The proper blending combination of the hydrophobic substance to the formulation is to be 1-15% by weight, desirably 1-10% by weight.

[Brief description of drawings]

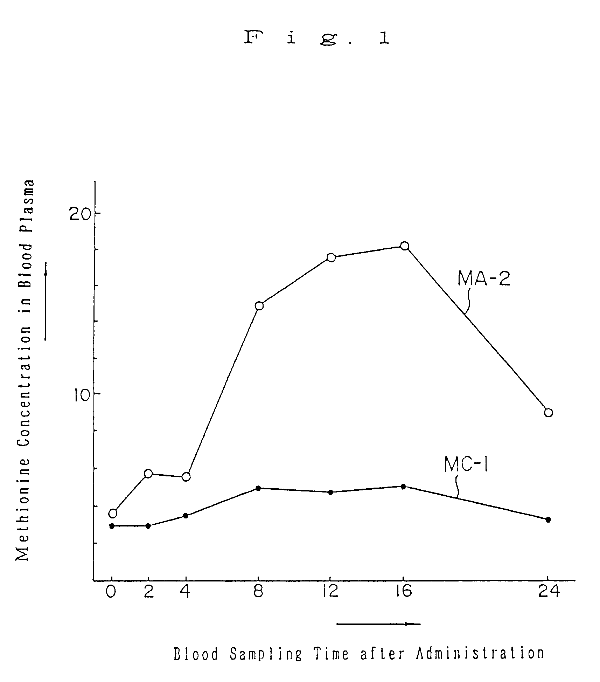

Fig. 1: Curved line of the concentration of active substance (methionine) in blood plasma.
Ordinate: Concentration of the active substance (methionine) in blood plasma (micromol/dl).
Abscissa: Blood sampling time after administration (hr.)
(a) Sample according to the invention (sample No.;MA-2)
(b) Sample of the comparative reference (sample No.;MC-1)
Determination method: The methionine formulation (100 g) was blended with the concentrate and administered to a cow (body weight: 335 kg).
Fig. 2: Graph of X-ray diffraction analysis for Ca salt of fatty acid in the sample containing methionine as the active substance and in the control reference sample.
(a) Sample which was only Ca salt of the fatty acid used as the preparation heated at 110°C and slowly cooled
     (control sample)
(b) Sample according to the invention (sample No.;MA-2)
(c) Sample of the comparative reference (sample No.;MC-1)
Fig. 3: Graph of X-ray diffraction analysis for Ca salt of fatty acid in the sample containing L-lysine(mono)hydrochloride as the active substance and in the control reference sample.
(a) Sample which was only Ca salt of the fatty acid used as the preparation heated at 110°C and slowly cooled
     (control sample)
(b) Sample according to the invention (sample No.;LA-1)
Fig. 4: Graph of X-ray diffraction analysis for Ca salt of fatty acid in the sample containing nicotinic acid amide as the active substance and in the control reference sample.
(a) Sample which was only Ca salt of the fatty acid used as the preparation heated at 110°C and slowly cooled
     (control sample)
(b) Sample according to the invention (sample No.:NA-1)

[Best mode for carrying out the invention]

(1) Preparation of various formulations

The indicated amounts of biologically active substances and Ca salts of mixed fatty acids and, if desired, hydrophobic substance was mixed, pressed to a diameter of 2-3 mm of strand shape by an extruder equipped with a vacuum pump, moulded by cutting to pellets of 2-3 mm of length and prepared as formulations of the invention: samples MA-1 to MA-10 (formulations containing methionine), samples LA-1 to LA-3 (formulations containing lysine hydrochloride) sample NA-1 (formulation containing nicotinic acid amide) and sample VA-1 (formulation containing vitamin E); as comparative reference formulations: samples MC-1 to MC-3 (formulations containing methionine) and sample LC-1 to LC-3 (formulations containing lysine hydrochloride).

The following Ca salt of mixed fatty acids was used in the invention.

(a) Composition of the fatty acids

Carbon number $C14$, $C16$, $C18$, $C18'$, $C18''$, $C20$

| Wt. % | 2 | 38 | 17 | 35 | 6 | 1 |

(b) Softening temperature of fatty acids
43°C

(c) Free $Ca(OH)_2$ content
2.5% by weight

A comparative formulation(CC-1) of which the protectant is hardened beef tallow oil and mean diameter is 1mm was moulded by granulation with a spraying granulator from a heat-melted composition of the active substance (methionine), hardened beef tallow oil and chitosan, was prepared. The composition of the prepared formulations, preparing conditions, characters of the formulation and crystallizing property are summarized in Table 1.

Each item in Table 1 was recorded according to the following specifications of (d)-(f).

(d) Void ratio was calculated as the following equation:

[(true specific gravity of the formulation-apparent specific gravity of it) / apparent specific gravity of it]

(e) Moisture content was determined by the weight loss on drying (110°C for 4 hours) and differential thermal analysis.

(f) Measure of crystallizing property was represented by percentage of peak strength of Ca salt of fatty acid in the samples to that of only Ca salt of the fatty acid which was heated and slowly cooled.

Each component in Table 1 is abbreviated by the following symbols.

MET : methionine
LYS : L-lysine hydrochloride
NAA : nicotinic acid amide
VEA : vitamin E acetate
ST : stearic acid
ML : myristic acid
YA : coconut oil
STA : stearyl alcohol
MP : wheat flour
HF : hardened beef tallow oil
CH : chitosan

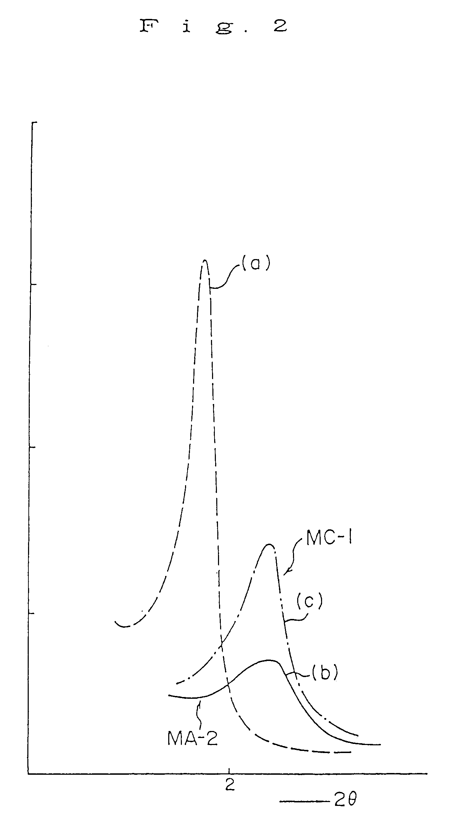

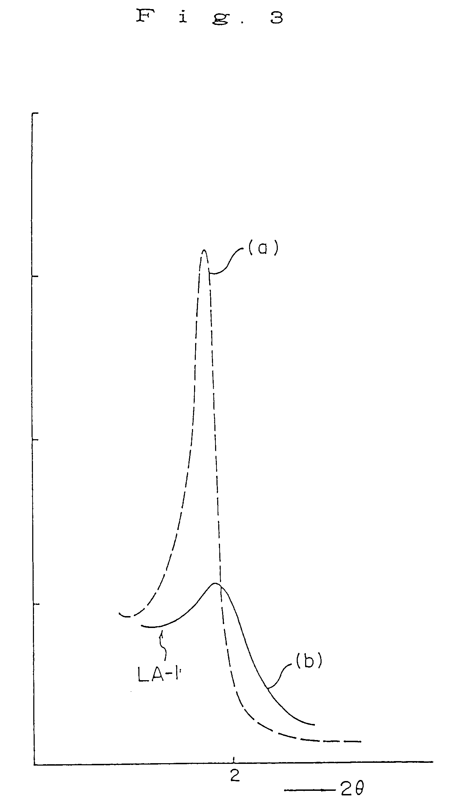

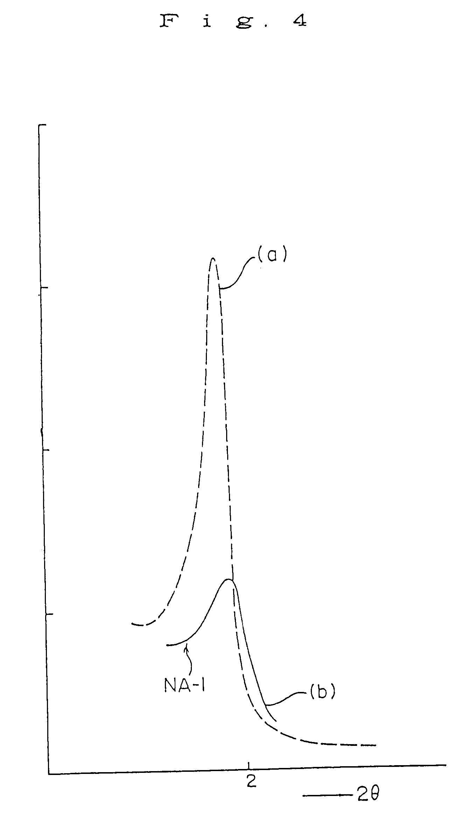

Graphs of X-ray diffraction are also shown in fig. 2, fig. 3 and fig. 4.

Table 1. Composition, Preparative Condition and Characters of the Formulation

| | Sample No. | Composition of the Formulation | | | | | Preparative Condition | | | | Characters of the Formulation | | | |
|---|---|---|---|---|---|---|---|---|---|---|---|---|---|---|
| | | Active Substance | | Protecting Material (Protectant) | | | | heating temp. | press-ure of degas | | cooling speed | average diameter | void ratio | moisture content | peak strength |
| | | | | Ca salts of Fatty Acids wt/% | Additives | | | | | | | | | | |
| | | Kind | wt/% | | Kind | wt/% | °C | | Torr (kPa) | °C/ min. | mm | % | % | % |
| Samples in the Invention | MA-1 | MET | 20 | 80 | —— | 0 | 155 | | 30 (3.9) | 40 | 2 | 1.1 | 1.27 | 23.8 |
| | MA-2 | MET | 30 | 70 | —— | 0 | 160 | | 30 (3.9) | 40 | 2 | 1.0 | 1.02 | 22.5 |
| | MA-3 | MET | 40 | 60 | —— | 0 | 170 | | 30 (3.9) | 40 | 2 | 1.6 | 1.48 | 23.0 |
| | MA-4 | MET | 30 | 65 | ST | 5 | 155 | | 30 | 40 | 2 | 1.8 | 1.21 | 22.0 |
| | MA-5 | MET | 30 | 65 | YA | 5 | 155 | | 30 | 40 | 2 | 1.1 | 1.24 | 20.3 |
| | MA-6 | MET | 40 | 58 | STA | 2 | 165 | | 30 | 40 | 2 | 1.3 | 1.55 | 21.8 |
| | MA-7 | MET | 40 | 58 | ML | 2 | 165 | | 30 | 40 | 2 | 1.6 | 1.36 | 22.0 |
| | MA-8 | MET | 30 | 60 | ST/MP | 5/5 | 155 | | 30 | 40 | 2 | 1.6 | 1.53 | 21.5 |
| | MA-9 | MET | 20 | 80 | —— | 0 | 155 | | 100 (13.2) | 40 | 2 | 7.5 | 1.83 | 30.0 |
| | MA-10 | MET | 30 | 70 | —— | 0 | 160 | | 100 (13.2) | 40 | 2 | 12.3 | 1.90 | 33.3 |
| | LA-1 | LYS | 20 | 80 | —— | 0 | 160 | | 30 (3.9) | 40 | 2 | 1.4 | 1.47 | 35.5 |
| | LA-2 | LYS | 25 | 75 | —— | 0 | 160 | | 30 | 40 | 2 | 1.5 | 1.03 | 35.0 |
| | LA-3 | LYS | 25 | 70 | HF | 5 | 160 | | 30 | 40 | 2 | 1.8 | 1.78 | 32.3 |
| | NA-1 | NAA | 25 | 75 | —— | 0 | 150 | | 30 | 40 | 2 | 1.8 | 1.09 | 37.5 |
| | VA-1 | VEA | 20 | 80 | —— | 0 | 150 | | 30 | 40 | 2 | 1.4 | 1.62 | 23.0 |

EP 0 478 783 B1

Table 1. Composition, Preparative Condition and Characters of the Formulation (continued)

| | Sample No. | Composition of Formulation | | | | | Preparative Condition | | | Characters of the Formulation | | | |
|---|---|---|---|---|---|---|---|---|---|---|---|---|---|
| | | Active Substance | | Protecting Material (Protectant) | | | heating temp. | press-ure of degas | cooling speed | average diameter | void ratio | moisture content | peak strength |
| | | Kind | wt/% | Ca salts of Fatty Acids wt/% | Additives | | ℃ | Torr (kPa) | ℃/min. | mm | % | % | % |
| | | | | | Kind | wt/% | | | | | | | |
| R e f e r e n c e s | MC-1 | MET | 30 | 70 | —— | 0 | 120 | 30 (3.9) | 40 | 2 | 0.9 | 2.25 | 45.0 |
| | MC-2 | MET | 30 | 70 | —— | 0 | 160 | —— | 40 | 2 | 22.0 | 2.13 | 28.7 |
| | MC-3 | MET | 30 | 70 | —— | 0 | 145 | 500 (66) | 40 | 2 | 16.9 | 1.85 | 39.5 |
| | LC-1 | LYS | 25 | 75 | —— | 0 | 155 | —— | 40 | 2 | 19.3 | 2.27 | 36.0 |
| | LC-2 | LYS | 25 | 75 | —— | 0 | 160 | 300 (39) | 40 | 2 | 13.5 | 2.11 | 35.3 |
| | LC-3 | LYS | 25 | 75 | —— | 0 | 170 | 500 (66) | 40 | 2 | 17.3 | 1.86 | 32.8 |
| | CC-1 | MET | 27 | —————— | HF/CH | 68/5 | 80 | 30 (3.9) | 50 | 1 | 0.5 | 0.01 | —— |

EP 0 478 783 B1

(2) Evaluation of the function (performance).

(a) Elution test of the active substance.

Two grams of each prepared formulation described in item (1) were immersed in 200 ml of Tris buffer solution corresponding to gastric juice of the rumen of a cow and kept with shaking at 37°C for 24 hours. Successively, the sample was transferred from Tris buffer into 200 ml of 0.05 M (=mol dm-3) hydrochloric acid corresponding to gastric juice of the abomasum of a cow and kept with shaking at 37°C for another 4 hours. Finally, the sample was transferred from 0.05 M hydrochloric acid into 200 ml of a solution corresponding to juice of small intestine of a cow and kept with shaking at 37°C for another 4 hours.

<Tris buffer solution>

6.06 g of [Tris(hydroxymethyl)aminomethane] was dissolved in 292 ml of 0.1 M hydrochloric acid and diluted to 1000 ml with water to a pH adjusted at 8.0.

The eluted quantity of active substance in each corresponding solution was determined by the following methods and the elution concentration was calculted.

(a) Lysine : Colorimetric determination by ninhydrin

(b) Methionine : Determination by iodine titration

(c) Vitamins : Determination by high performance liquid chromatography

Each determined value is summarized in Table 2.

Table 2. Elution Properties of the Active Substances

| | No. | Sample No. | Corresponding Solution (Tr) to Rumen (%) | Corresponding Solution (CL) to Abomasum (%) | Corresponding solution to small Intestine (Lipase) (%) |
|---|---|---|---|---|---|
| Samples in the invention | a- 1 | MA- 1 | 13.5 | 65.9 | 11.8 |
| | a- 2 | MA- 2 | 19.9 | 52.5 | 21.4 |
| | a- 3 | MA- 3 | 23.8 | 53.9 | 12.9 |
| | a- 4 | MA- 4 | 13.5 | 58.1 | 18.4 |
| | a- 5 | MA- 5 | 10.2 | 56.1 | 24.0 |
| | a- 6 | MA- 6 | 13.4 | 56.6 | 18.2 |
| | a- 7 | MA- 7 | 18.4 | 58.0 | 18.1 |
| | a- 8 | MA- 8 | 16.5 | 69.5 | 9.4 |
| | a- 9 | MA- 9 | 15.9 | 55.5 | 14.7 |
| | a-10 | MA-10 | 25.3 | 58.6 | 10.4 |
| | a-11 | LA- 1 | 29.3 | 53.4 | 10.4 |
| | a-12 | LA- 2 | 34.6 | 54.1 | 3.7 |
| | a-13 | LA- 3 | 27.1 | 57.8 | 4.4 |
| | a-14 | NA- 1 | 18.8 | 44.5 | 27.0 |
| | a-15 | VA- 1 | 5.9 | 75.0 | 15.6 |
| References | ca-1 | MC- 1 | 19.4 | 19.2 | 13.3 |
| | ca-2 | MC- 2 | 59.4 | 11.0 | 8.1 |
| | ca-3 | MC- 3 | 43.8 | 23.7 | 14.1 |
| | ca-4 | LC- 1 | 27.3 | 14.8 | 12.4 |
| | ca-5 | LC- 2 | 52.6 | 29.4 | 10.9 |
| | ca-6 | LC- 3 | 60.9 | 23.7 | 8.3 |
| | ca-7 | CC- 1 | 19.7 | 55.3 | 21.1 |

(b) Migration test into blood.

Each sample of the invention and comparative reference described in the preceding item (1) is blended with concentrate and administered to a cow, body weight of 335 kg, and the concentration of the active compound in blood was determined.

The concentration of the active compound in plasma is shown in Table 3 and the curved line of the methionine concentration is shown in fig. 1.

Table 3 . Concentration of Active component in Plasma

| No. | | Sample No. | Dose(g) | | Time Course after administration (hour) | | | | | | |
|---|---|---|---|---|---|---|---|---|---|---|---|
| | | | Formula-tion | Active Compd. | 0 | 2 · 4 | | 8 | 12 | 16 | 24 |
| ‡1 | b-1 | MA-2 | 100 | 30 | 3.5 | 5.7 | 5.6 | 14.8 | 17.6 | 18.2 | 8.9 |
| | b-2 | MA-3 | 75 | 30 | 3.5 | - | - | 11.6 | 10.0 | - | 6.3 |
| | b-3 | MA-6 | 75 | 30 | 3.7 | - | - | 10.9 | 15.3 | - | 7.6 |
| | b-4 | LA-2 | 120 | 30 | 6.7 | - | - | 7.3 | 10.7 | - | 8.3 |
| ‡2 | bc-1 | MC-1 | 100 | 30 | 2.9 | 2.9 | 3.4 | 4.9 | 4.7 | 5.0 | 3.2 |
| | bc-2 | LC-1 | 120 | 30 | 6.5 | - | - | 5.8 | 5.3 | - | 6.8 |

‡1:Samples in the invention
‡2:References

Unit of the concentration in blood plasma is as follows:

Methionine: micro mol/dl, L-Lysine: mol/ total amino acid mol (%)

As shown in Table 2, the formulations in the invention are well bypassing through the rumen. Although L-lysine hydrochloride (cf. Example a-11-13) is originally difficult to bypass through the rumen because of its very high water solubility, it is shown that more than 50% of L-lysine hydrochloride in the formulation is absorbed and digested in the abomasum or following organs. The suggestion is consistently supported by the concentration of active substance in blood which is the result of its migration test into plasma as shown in Table 3.

(c) Heat resistant stability test.

The prepared sample MA-1 of the invention and the comparative reference one CC-1 in item (1) described above were kept under two stage conditions at 50°C for 10 days and 60°C for 10 days and then each appearance was observed by the naked eye.

The samples of the invention and the comparative reference were also blended in formula feed, moulded to pellet at 80°C and then each appearance was observed by the naked eye.

The results of the observations are shown in Table 4.

### Table 4. Heat Resistant Stability of Formulations.

| No. | Sample No. | Preservation Stability | | Pelletizing test |
|---|---|---|---|---|
| | | 50°C × 10days | 60 °C × 10days | 80°C |
| Examples in the invention | MA-1 | not changed | not changed | broken slightly |
| Comparative references | CC-1 | concreted | melted | melted |

As shown in Table 4, the formulation has an excellent heat resistant stability in comparison with old formulations in which main protectant is hardened oil.

[Industrial applicability]

As shown in examples in Table 2, the formulations have excellent properties of both rumen bypassing, digestion and absorption efficiency in the abomasum and following digestive organs, and also have sufficient heat resistant stability in comparison to the prior art formulations.

As mentioned above, oral adminstration of the formulations of the invention is expected to bring growth promotion, improvement of milk quality, increase of lactation, improvement of wool quality and prevention from disease in parturition and in early lactation for ruminants, etc.

Good results are obtained with the formulations of the invention in providing a ruminant feedstuff which is well bypassed through the rumen and is well digested and absorbed in the abomasum and following digestive organs.

Therefore, this invention will be contribute to the industrial, especially live stock breeding world very well.

## Claims

1. Ruminant feedstuffs comprising a formulation in which at least one kind of biologically active substances selected from the group consisting of amino acids, their salts and vitamins is dispersed in a protectant containing calcium salts of mixed fatty acids as a main component, optionally together with hydrophobic substances which - at least under acidic conditions - are soluble with the calcium salts, or specific gravity adjusting materials or binders, which formulation has a void ratio, being estimated from the difference between the theoretical specific gravity as calculated for each component of the formulation and the bulk specific gravity of the formulation experimentally observed, of 15% or less and a moisture content of 2% by weight or less.

2. Ruminant feedstuffs as defined by claim 1, wherein the amino acids and their salts are at least one kind selected from group consisting of methionine, tryptophane and lysine hydrochloride.

3. Ruminant feedstuffs as defined by claim 1, wherein the vitamins are at least one kind selected from group consisting of vitamin A, vitamin $D_3$, vitamin E, nicotinic acid amide and beta-carotene.

4. Ruminant feedstuffs as defined by claim 1, wherein the mixed fatty acids are derived from natural fats or oils and their melting point is in the range of 30-50°C.

5. Ruminant feedstuffs as defined by any one of claims 1-4, wherein the free $Ca(OH)_2$ content in the calcium salts is 5% by weight or less.

12

6. Ruminant feedstuffs as defined by any one of claims 1-5, wherein the calcium salts of mixed fatty acids have essentially an amorphous structure.

## Patentansprüche

1. Nahrungsmittel für Wiederkäuer, umfassend eine Zubereitung, bei der mindestens eine Art von biologisch aktiven Substanzen, ausgewählt aus der Gruppe bestehend aus Aminosäuren, deren Salzen und Vitaminen, in einem Schutzmittel dispergiert ist, enthaltend Calciumsalze von gemischten Fettsäuren als Hauptbestandteil, gegebenenfalls zusammen mit hydrophoben Substanzen, die zumindest unter sauren Bedingungen mit den Calciumsalzen löslich sind, oder das spezifische Gewicht einstellende Materialien oder Bindemittel, wobei die Zubereitung eine Porenziffer, bestimmt durch die Differenz zwischen dem theoretischen spezifischen Gewicht, wie es für jede Komponente der Zubereitung berechnet worden ist, und der spezifischen Schüttdichte der Zubereitung, die experimentell beobachtet wird, von 15% oder weniger und einen Feuchtigkeitsgehalt von 2% oder weniger besitzt.

2. Nahrungsmittel für Wiederkäuer, wie in Anspruch 1 definiert, wobei die Aminosäuren und ihre Salze mindestens eine Art sind, ausgewählt aus der Gruppe bestehend aus Methionin, Tryptophan und Lysinhydrochlorid.

3. Nahrungsmittel für Wiederkäuer, wie in Anspruch 1 definiert, wobei die Vitamine mindestens eines sind, ausgewählt aus der Gruppe bestehend aus Vitamin A, Vitamin $D_3$, Vitamin E, Nicotinsäureamid und $\beta$-Caroten.

4. Nahrungsmittel für Wiederkäuer, wie in Anspruch 1 definiert, wobei die gemischten Fettsäuren abgeleitet sind von natürlichen Fetten oder Ölen und ihr Schmelzpunkt im Bereich von 30-50°C liegt.

5. Nahrungsmittel für Wiederkäuer, wie in einem der Ansprüche 1 bis 4 definiert, wobei der Gehalt an freiem $Ca(OH)_2$ in den Calciumsalzen 5 Gew.-% oder weniger beträgt.

6. Nahrungsmittel für Wiederkäuer, wie in einem der Ansprüche 1 bis 5 definiert, wobei die Calciumsalze der gemischten Fettsäuren eine im wesentlichen amorphe Struktur besitzen.

## Revendications

1. Produits alimentaires pour ruminants comprenant une formulation dans laquelle au moins une sorte de substances actives biologiquement choisies dans le groupe consistant des acides aminés, de leurs sels et des vitamines est dispersée dans un protecteur contenant des sels de calcium d'acides gras mixtes en tant que composant principal, optionellement ensemble avec des substances hydrophobes qui - au moins dans des conditions acides - sont solubles avec les sels de calcium, ou des matériaux d'ajustement dans la gravité spécifique ou des liants, laquelle formulation a un rapport de vides, étant estimé à partir de la différence entre la gravité spécifique théorique comme calculée pour chaque composant de la formulation et la gravité spécifique globale de la formulation observée expérimentalement, de 15 % ou moins et une teneur en humidité de 2 % en poids ou moins.

2. Produits alimentaires pour ruminants selon la revendication 1, dans lesquels les acides aminés et leurs sels sont au moins d'un type sélectionné dans le groupe consistant de la méthionine, du tryptophane et de l'hydrochlorure de lysine.

3. Produits alimentaires pour ruminants selon la revendication 1, dans lesquels les vitamines sont au moins d'un type choisi dans le groupe consistant de la vitamine A, de la vitamine $D_3$, de la vitamine E, de l'amide d'acide nicotinique et du béta-carotène.

4. Produits alimentaires pour ruminants selon la revendication 1, dans lesquels les acides gras mixtes sont dérivés de graisses naturelles ou d'huiles naturelles et dont le point de fusion est dans l'intervalle de 30-50°C.

5. Produits alimentaires pour ruminants selon l'une quelconque des revendications 1 à 4, dans lesquels la teneur en Ca(OH)$_2$ libre dans les sels de calcium est de 5 % en poids ou moins.

6.  Produits alimentaires pour ruminants selon l'une quelconque des revendications 1-5, dans lesquels les sels de calcium des acides gras mixtes ont essentiellement une structure amorphe.

Fig. 1

F i g . 2

F i g . 3

F i g . 4